# EUROPEAN PATENT SPECIFICATION

(11) **EP 0 749 547 B1**
(45) Date of publication and mention of the grant of the patent: **26.05.1999**
(21) Application number: 95907106.9
(22) Date of filing: 03.02.1995
(51) Int. Cl.: F16L 17/03, F16L 37/06, F16L 47/06, F16L 21/03

(54) **FLUID FLOW CONNECTIONS**
FLÜSSIGKEITSVERBINDUNG
RACCORDS POUR ECOULEMENTS DE FLUIDES

(30) Priority: 09.03.1994 GB 9404515
(43) Date of publication of application: 27.12.1996
(73) Proprietor: BAXTER WOODHOUSE & TAYLOR LIMITED, Macclesfield Cheshire SK10 4NJ (GB)
(72) Inventor: WEARING, Stephen Edwin, Near Leek, Staffordshire ST13 8UW (GB)
(74) Representative: Hill, Richard
(86) International application number: GB9500223
(87) International publication number: WO9524580

(56) References cited:
- EP-A- 0 448 921
- WO-A-93/07416
- US-A- 3 998 478

## Description

The invention concerns fluid flow connections, and has particular, though not exclusive, reference to an arrangement for connecting a ducting to an outlet valve of a low pressure air delivery system of the kind used in, for example, passenger aircraft.

In providing localised jets of low pressure air in, for example, an aircraft cabin, it is usual to provide a manually adjustable outlet at each intended position of delivery, low pressure air being supplied to a multiplicity of such outlets from a common source through flexible ducting, the individual outlets being secured to respective ducting delivery lines by circlips, tape or by other means. Assembly of the ventilation system as a whole, and particularly the connection of the manually adjustable outlets, is a labour intensive activity, and is hence comparatively expensive. Furthermore, due to the limited availability of space at the position whereat the outlet is to be secured to the ducting, difficulty is often experienced in satisfactorily securing such outlet to the ducting, and this often leads to insecure or ineffective attachment.

In published International Application No. PCT/GB 92/01774 WO-A-93/07416 in the name of the present applicants, there is disclosed an arrangement for connecting a ducting to an outlet valve of a low pressure air delivery system which includes a flexible tubular membrane which, in use, is secured in sealed relationship with one end of air supply ducting.

However, problems have been encountered with the arrangement of the type described in this application insofar as any increase in the flow or effective magnitude of the flow which impinges on the membrane caused directly by an increase in the supply of air or indirectly by increasing the cross sectional area of the ducting, and consequently the connector, can cause the membrane to be blown out, thereby breaking the fluid flow connection between the ducting and the outlet valve.

It is an object of the present invention to provide an improved fluid flow connection which overcomes or at least minimises the problem mentioned above.

According to the present invention there is proposed a fluid flow connection in a pressure fluid feed system which comprises a delivery ducting and an outlet telescopingly engageable therewith, the said connection including a flexible tubular membrane secured in sealed relationship with one element for surface contact with the other element within the axial extent of telescopic engagement of the elements on such engagement, to define a space between said surface and a remaining part of said connection at that side of the membrane remote from said other element which is in fluid flow relationship with the pressure fluid, said space being divided into multiple discrete pockets.

Preferably the space is divided into multiple discrete pockets by the provision of a plurality of connecting ribs at spaced positions within the space which divide the space into discrete pockets. Preferably the connecting ribs are formed integrally with the ducting element and most preferably connect the membrane to the ducting wall.

According to a preferred feature, the membrane is provided within the ducting element at or adjacent its downstream end to extend axially inwardly thereof and bears on the outer surface of an outlet element arranged coaxially within the ducting.

According to a further preferred feature, a lip is provided at or adjacent the end of the outlet element, the lip being an interference fit with the membrane.

According to a still further preferred feature, the end of the ducting element has a stepped bore to define a shoulder to receive the end of the outlet element into abutment therewith.

The invention will now be described further, by way of example only, with reference to the accompanying diagrammatic drawings illustrating one embodiment thereof and in which:-
Fig. 1 is a front elevation, partly in section, showing a ducting applied to an inlet pipe in accordance with the principle of the invention;
Fig. 2 shows a part of the arrangement shown in Fig. 1 drawn to an enlarged scale, the conicity of the internal element being exaggerated for purposes of illustration; and
Fig. 3 shows an end view of the ducting of Figs. 1 and 2.

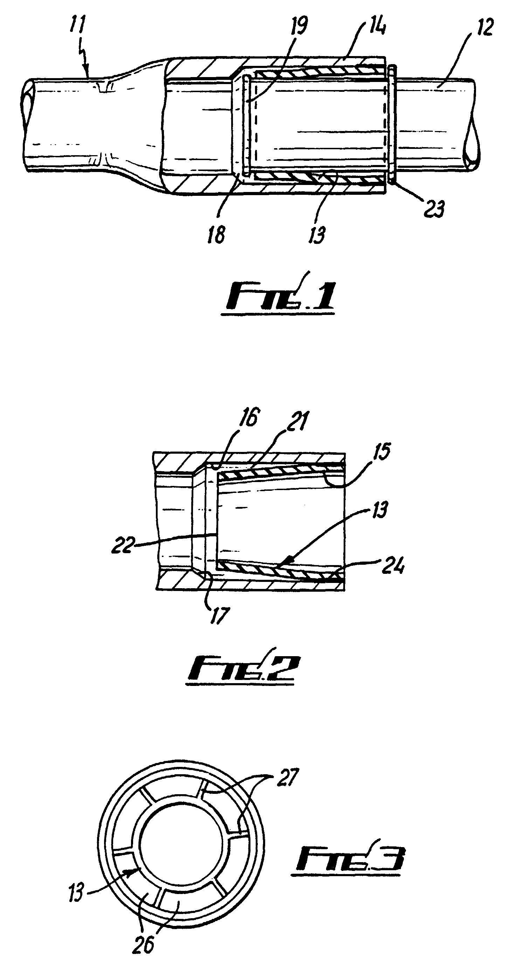

Referring now to Figs. 1 and 2, a connection for providing a sealed connection between a ducting 11 and a rigid coupling 12 includes a sleeve-like flexible membrane 13 provided internally of the ducting 11 at the free end 14 thereof, the membrane 13 being secured to the ducting 11 at its axially outer extremity 15 and preferably being an interference fit on the coupling 12.

The membrane 13 is conveniently of slightly conical form, though this is not essential, and is in radial register with an enlarged diameter bore 16 to the conduit 11 at the outer end thereof. Inwardly of this conduit 11 the membrane 13 terminates short of a shoulder 17 at the inner end of the enlarged diameter bore 16, to provide an annular recess 18 to receive a radially outwardly directed rib 19 provided on the end of the coupling 12, the outside diameter of the rib 19 being in excess of the inside diameter of the free end of the membrane 13 in the relaxed state thereof.

In the assembled condition of the connection an annular space 21 will ordinarily exist between the membrane 13 and ducting 11, such space 21 being open axially inwardly of the ducting and closed at the outer extremity of such ducting.

As can be seen more clearly from Fig. 3, the space 21 is divided into pockets 26 by the provision of ribs 27 which are formed integrally with the membrane 13 and link the membrane 13 to the ducting wall at the free end 14 at spaced circumferential positions.

As will readily be appreciated, pressure air flowing through the ducting 11 towards the coupling 12 can access the annular space 21 and the pressure of such air will accordingly be applied to the back of the membrane 13 and thus will load such membrane 13 into sealing relationship with the coupling 12. Since the space between the membrane and the remainder of the connection is divided into small pockets 26 it will be appreciated that the load on the coupling 12, when the connection is in use, will be uniformly applied over the area of each pocket 26 and furthermore the provision of the ribs 27 which inter-connect the ducting wall and the membrane 13 at the free end 14 increases the blow out pressure of the connection, i.e. to the pressures at which the pressurised air in space 21 overcomes the seal between the membrane and the coupling and causes the membrane to blow back outside of the ducting. The extent of initial engagement between the ducting 11 and coupling 12 will be limited by abutment of the rib 19 on the coupling 12 with the internal shoulder 17 in the ducting 11, whilst disengagement of the ducting 11 and coupling 12 will be resisted by abutment of the inner end 22 of the membrane and rib 19.

However, whilst the provision of the rib 19 is advantageous, in that it maintains engagement between the ducting 11 and coupling 12 and indeed serves also as a deflector to direct pressure air to the back of the membrane., it is not thought that such rib 19 is an essential integer of the arrangement in all applications. Furthermore, whilst the depth of engagement between the ducting 11 and coupling 12 is limited by contact between the rib 19 and internal shoulder 17, a like effect is attainable, if desired, by providing abutment means on the coupling in appropriately spaced disposition with respect to the end of such coupling, such as at 23 in Fig. 1. In the arrangement illustrated, the membrane 13 is shown as a separate element secured internally of the ducting 11 as by an adhesive 24, but in an alternative embodiment an end fitting for a ducting is proposed which comprises a membrane as aforesaid moulded integrally with a body part, the body part having a stepped bore to receive the membrane on engagement of the fitting with the coupling and being secured to the ducting in any convenient manner.

The material of the membrane will ordinarily be silicon rubber, as too will be the ducting, but other materials may be used, the requirement being simply that the membrane be capable of being moved into sealing contact with the coupling by the pressure. Alternative materials will include neoprene and polyurethane, but the choice of materials will depend upon the particular application involved. The ducting itself may be flexible or rigid, and may include a helical reinforcement.

The invention is not restricted to the detail of the embodiment hereinbefore described, since alternatives will readily present themselves to one skilled in the art. Thus, for example, whilst in the arrangement -shown in the drawings the membrane is in radial register with an enlarged diameter bore part of a stepped bore at the outer end of the conduit, such membrane may be provided merely as a membrane secured to the surface of a pipe or tube and in radial alignment with a portion thereof, the disposition of the free membrane part being such as to receive pressure fluid at the back thereof in a manner to enhance the sealing effect of the membrane against the surface of another element in telescoped engagement therewith.

## Claims

1. A fluid flow connection in a pressure fluid feed system which comprises a delivery ducting (11) and an outlet (12) telescopingly engageable therewith, the said connection including a flexible tubular membrane (13) secured in sealed relationship with one element for surface contact with the other element within the axial extent of telescopic engagement of the elements on such engagement, to define a space (21) between said surface and a remaining part of said connection at that side of the membrane (13) remote from said other element which is in fluid flow relationship with the pressure fluid characterised in that, said space (21) is divided into multiple discrete pockets (26).

2. A fluid flow connection according to claim 1 wherein the space (21) is divided into multiple discrete pockets (26) by the provision of a plurality of connecting ribs (27) at spaced positions within the space (21) which divide the space (21) into discrete pockets (26).

3. A fluid flow connection according to claim 2 wherein the connecting ribs (27) are formed integrally with the ducting element (11).

4. A fluid flow connection according to either claim 2 or claim 3 wherein the connecting ribs (27) connect the membrane (13) to the ducting wall (11).

5. A fluid flow connection according to any one of claims 1 to 4 wherein the membrane (13) is provided with a ducting element (11) at or adjacent its downstream end to extend axially inwardly thereof and bears on the outer surface of an outlet element (12) arranged coaxially within the ducting (11).

6. A fluid flow connection according to any one of claims 1 to 5 wherein a lip (19) is provided at or adjacent the end of the outlet element (12), the lip (19) being an interference fit with the membrane (13).

7. A fluid flow connection according to any one of claims 1 to 6 wherein an end of the ducting element (11) has a stepped bore to define a shoulder (17) to receive the end of the outlet element (12) into abutment therewith.

## Patentansprüche

1. Fluiddurchflußverbindung in einem Druckfluidfördersystem, das eine Abgabeleitung (11) und einen hiermit teleskopartig in Eingriff bringbaren Auslaß (12) umfaßt, wobei die Verbindung eine flexible schlauchförmige Membran (13) einschließt, die in abdichtender Beziehung zu einem Element zum oberflächlichen Kontakt mit dem anderen Element in der axialen Erstreckung des teleskopischen Eingriffs der Elemente aufgrund solchen Eingriffs gesichert ist, um einen Raum (21) zwischen der Oberfläche und einem verbleibenden Teil der Verbindung an dieser Seite der Membran (13) entfernt von dem anderen Element zu definieren, das in Fluiddurchflußbeziehung mit dem Druckfluid steht, dadurch gekennzeichnet, daß der Raum (21) in eine Vielzahl von diskreten Taschen (26) unterteilt ist.

2. Fluiddurchflußverbindung nach Anspruch 1, wobei der Raum (21) durch das Vorsehen einer Vielzahl von Verbindungsrippen (27) in beabstandeten Positionen in dem Raum (21), die den Raum (21) in diskrete Taschen (26) teilen, in eine Vielzahl von diskreten Taschen (26) unterteilt ist.

3. Fluiddurchflußverbindung nach Anspruch 2, wobei die Verbindungsrippen (27) einstückig mit dem Leitungselement (11) ausgeformt sind.

4. Fluiddurchflußverbindung nach Anspruch 2 oder 3, wobei die Verbindungsrippen (27) die Membran (13) mit der Wandung der Leitung (11) verbinden.

5. Fluiddurchflußverbindung nach einem der Ansprüche 1 bis 4, wobei die Membran (13) mit einem Leitungselement (11) an oder benachbart zu ihrem stromabwärtigen Ende versehen ist, um sich axial einwärts hiervon zu erstrecken, und auf der Außenfläche ein Auslaßelement (12) trägt, das koaxial in der Leitung (11) angeordnet ist.

6. Fluiddurchflußverbindung nach einem der Ansprüche 1 bis 5, wobei eine Lippe (19) an oder benachbart zu einem Ende des Auslaßelements (12) vorgesehen ist, wobei die Lippe (19) einen Festsitz für die Membran (13) bildet.

7. Fluiddurchflußverbindung nach einem der Ansprüche 1 bis 6, wobei ein Ende des Leitungselements (11) eine gestufte Bohrung besitzt, um eine Schulter (17) zu definieren, um das Ende des Auslaßelements (12) in Anschlag hierzu aufzunehmen.

## Revendications

1. Raccord d'écoulement de fluide d'un système de distribution de fluide sous pression comprenant une canalisation d'amenée (11) et un élément de sortie (12) pouvant s'y emboîter de façon télescopique, ledit raccord comprenant une membrane tubulaire flexible (13), fixée de façon étanche à un premier élément en vue d'avoir un contact surfacique avec l'autre élément sur une partie de la distance axiale d'emboîtement télescopique de ces éléments lors de leur emboîtement, ladite membrane délimitant, entre ladite surface et une partie restante dudit raccord située du côté de la membrane (13) éloigné dudit autre élément, un espace (21) qui communique avec l'écoulement de fluide sous pression, caractérisé par le fait que ledit espace (21) est divisé en multiples alvéoles discrètes (26).

2. Raccord d'écoulement de fluide selon la revendication 1, dans lequel l'espace (21) est divisé en multiples alvéoles discrètes (26) par une pluralité de nervures de liaison (27) situées en des positions séparées dans l'espace (21) et qui divisent l'espace (21) en alvéoles discrètes (26).

3. Raccord d'écoulement de fluide selon la revendication 2, dans lequel les nervures de liaison (27) sont formées monobloc avec l'élément de canalisation (11).

4. Raccord d'écoulement de fluide selon la revendication 2 ou 3, dans lequel les nervures de liaison (27) relient la membrane (13) à la paroi de la canalisation (11).

5. Raccord d'écoulement de fluide selon l'une quelconque des revendications 1 à 4, dans lequel la membrane (13) est munie, au niveau ou au voisinage de son extrémité d'aval, d'un élément de canalisation (11) et s'étend axialement en son intérieur, en reposant sur la surface extérieure d'un élément de sortie (12) disposé coaxialement à l'intérieur de la canalisation (11).

6. Raccord d'écoulement de fluide selon l'une quelconque des revendications 1 à 5, dans lequel une lèvre (19) est formée au niveau ou au voisinage de l'extrémité de l'élément de sortie (12), la lèvre (19) formant un ajustement serré avec la membrane (13).

7. Raccord d'écoulement de fluide selon l'une quelconque des revendications 1 à 6, dans lequel l'extrémité de l'élément de canalisation (11) présente un alésage à échelon de diamètre définissant un épaulement (17) qui sert de butée à l'extrémité de l'élément de sortie (12).
